## Europäisches Patentamt
## European Patent Office
## Office européen des brevets

(11) Publication number: **0 215 999**
**B1**

(12) **EUROPEAN PATENT SPECIFICATION**

(45) Date of publication of patent specification: **02.05.90**

(21) Application number: **86100010.7**

(22) Date of filing: **02.01.86**

(51) Int. Cl.⁵: **F 16 F 15/02**

(54) Parametrically controlled active vibration isolation system.

(30) Priority: **31.07.85 US 760850**

(43) Date of publication of application:
**01.04.87 Bulletin 87/14**

(45) Publication of the grant of the patent:
**02.05.90 Bulletin 90/18**

(84) Designated Contracting States:
**DE FR GB IT SE**

(56) References cited:
**DE-A-2 346 279**
**DE-A-3 148 226**
**GB-A-2 036 246**

(73) Proprietor: **BARRY WRIGHT CORPORATION**
**1 Newton Executive Park**
**Newton Lower Falls Massachusetts 02162 (US)**

(72) Inventor: **Schubert, Dale W.**
**91 Horse Pond Road**
**Sudbury, MA 01776 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

Related patent application

This application is related to EP—A—195 850, the disclosure of which is hereby incorporated.

Background of the invention

The invention relates to a vibration isolation apparatus and method, and more particularly to a supportive or suspension system adapted to be coupled between two elements or structures for the reduction of transmitted mechanical excitations therebetween.

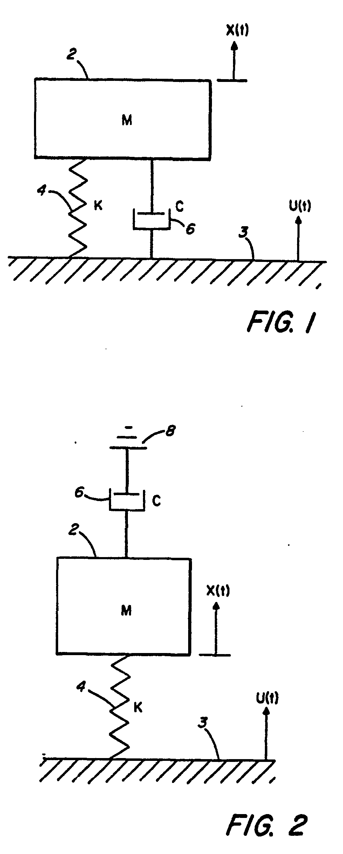

Consider a conventional single degree of freedom vibration isolation system using linear viscous damping such as is presented in Figure 1. The forces acting on the payload of mass "M", designated by the numeral 2, which is isolated relative to a foundation 3, are the spring force which is described as being equal to the spring stiffness constant "K" times the compression of spring 4 which is the isolator relative deflection, the dissipation force which is the linear damping coefficient "C" times the rate of compression of viscous damper 6 which is the relative velocity. These two forces must be counteracted by the isolated payload mass 2 inertial force which is the payload mass coefficient "M" multiplied by the acceleration of the payload mass itself.

In the vibration isolation field it is well known that damping in linear viscous systems controls the resonant characteristics of the entire vibration isolation system. Adding damping lowers the detrimental effect of the resonance amplification. However, as the damping is increased resonance amplification does indeed go down but the degree of high frequency vibration isolation is lowered. In fact, if the fraction of critical damping is set to unity to eliminate the effect of resonance amplification, most all vibration isolation is lost. Even at very high frequencies above the resonant frequency, the rate of vibration isolation only increases by six decibel per octave.

Another well-known type of vibration isolation system is one in which the resonant amplification is well controlled by viscous damping but does so in a manner so as to preserve the vibration isolation offered at high frequencies. This type of vibration isolation system uses a linear viscous damper connected to the isolated payload so as to act as a "sky hook"; the configuration of this type of vibration isolator is presented in Figure 2. In this figure, the linear viscous damper 6 is connected to the isolated payload 2 at one end and to a stationary location in space at the other end, known as a "sky hook" 8.

It is the stationary connection which makes the passive "sky hook" damped system impossible to construct. For in the world of vibrations all masses that are accessible to the vibration isolation system are also in motion and thus do not act as a true "sky hook". Such a system can be approximated by using active vibration isolation techniques taught in my earlier patent application. But my earlier invention, like other active vibration isolation systems, is limited in its effectiveness in two areas. First, such systems are generally stability limited and thus cannot be just "slipped in place", so to speak, without the necessary system stabilization circuits tailored to suit the individual application. Secondly, such systems generally require power to operate and are limited in both force and motion output by power requirement limitations imposed by an individual design.

Desirable is an active vibration isolation system having a controlled damping coefficient such that its vibration isolation characteristics can be tailored as desired. Preferably, the characteristics can be tailored to approximate a "sky hook" damper.

Understanding of the present invention would be aided by a brief mathematical analysis of the "sky hook" type vibration isolation system as presented in Figure 2. For this system, the damping force is equal to the payload's absolute velocity times the viscous damping coefficient of the damper.

The equation of motion for the "sky hook" damped vibration isolation system is presented in EQ (1);

$$M(d^2X)=K(U-X)-C(dX) \qquad (1)$$

In EQ (1), "dX" and "d²X" are the velocity and acceleration, respectively, of the payload mass M, and "U" is the time-dependent displacement of the foundation relative to which the payload is isolated. (Throughout the specification, the time derivative shall be symbolized for convenience without the denominator, "dt" or "dt²")

One solution of this equation, for the case of steady state sinusoidal vibration, is the transmissibility vector equation for the "sky hook" damper vibration isolation system. In Laplace Transformation notation, the soluion is as follows:

$$\frac{X[S]}{U[S]} = \frac{W^2_n}{[S+2(zeta)SW_n+W^2_n]} \qquad (2)$$

where "$W^2_n$" is equal to "K" divided by "M", "zeta" is equal to "C" divided by the magnitude of critical damping, and "S" is the Laplace Operator.

The damping term associated with the system's fraction of critical damping, "zeta", appears in the denominator of the equation only. This is unlike the analogous solution for the system presented in Figure 1 wherein the "zeta" term appears in both the numerator and denominator. This seemingly minor difference between the well-known equation for the transmissibility vector for the conventional isolation system and the equation for the "sky hook" damped isolation system has, however, profound effects in the manner in which viscous damping manifests itself in the overall vibration isolation characteristics. In the "sky hook" damped system, as the degree of damping is increased and the fraction of critical damping "zeta" approaches large values above unity, the amplification due to resonance disappears and vibration isolation start at zero frequency with a peak transmissibility of unity occurring also at zero frequency. More importantly, the increase in damping used to eliminate the systems' resonance alos adds vibration isolation for all frequencies below the undamped resonant frequency.

For "sky-hook" type systems the effect of additional damping for small fractions of critical damping is virtually the same as for the conventionally damped vibration isolation system in the manner in which the amount of resonant amplification is reduced. However as the fraction of critical damping is increased, exceeding a value of approximately 0.2, it is observed that not only is the amplification of vibration due to the system resonance decreased but at the same time there is no loss of vibration isolation characteristics at frequencies above resonance. This effect continues even for very large fractions of critical damping.

Desirable, therefore, would be a realizable vibration isolation system which achieves or at least approximates the advantageous vibration isolation of a "sky hook" damped system.

DE—A—23 46 279 refers to a semi-active controlled vibration isolation system from which it can be seen, especially from Fig. 2 thereof, that the piston or plunger of a viscous damper separates two working chambers. The chambers are interconnected with each other by means of check valves which, in their normal position, allow fluid supply in one direction only as indicated by the arrows in said valves. By applying an electric current to the valves, the orifices in the valves can be varied. The payload is provided with an accelerator detector, the output signal of which is used to operate the respective check valves by means of an electric circuit.

DE—A—31 48 226 refers to a vibration damping system in which the plunger piston separates two working chambers. One of said working chambers is provided with pressurized fluid by a pump. A specific amount of the working fluid also passes through a variable flow resistance which is presettable and is variable dependent on the motion of a control piston which is operated by the pressure of the other of said two working chambers.

From GB—A—2 036 246 a hydraulic damper is known comprising a cylinder containing therein hydraulic fluid, a piston working in the cylinder, a piston rod secured to the piston and extending out of the cylinder through one end thereof, a damping force generating mechanism mounted on the piston, an adjusting member one end of which cooperates with the damping force generation mechanism and the other end of which extends through the piston rod to the outside, and a motor connected to the other end of the adjusting member and controlled by means. However, from this document no active vibration isolation system is known. There are not provided first and second means for deriving the velocity representing signals, where the first means provide a signal representative of the velocity of a payload and the second means provide a signal representative of the velocity of a base. Furthermore the adjusting hydraulic dampers of this document can not provide a system for deriving a signal which varies in accordance with the ratio of the signal representing the relative velocity of the payload to the signal representing the velocity of the supporting base.

It is, therefore, an object of the present invention to provide an active vibration isolation system exhibiting improve stability in requiring less power than conventional active system. Furthermore, it is an object of the present invention to provide a realisable vibration isolation system which is characterized by a transmissibility vector equation approximating that of a "sky hook" damper system, having substantially no resilient amplification. This object is achieved by a system according to Claim 1.

According to the preferred embodiment of the invention, both of the velocity sensors are geophones, and the modulating means includes electromechanical drive means responsive to the command signal for regulating the flow of hydraulic fluid through a servovalve. The servovalve preferably includes a unidirectional or bidirectional valve spool which acts to constrict fluid flow through a passage connecting an actuator with an accummulator. The actuator is adapted and configured to hydraulically support a payload with reference to a base on which the accummulator rests or to which it is secured.

The vibration isolation system as described and claimed herein is, in effect, an active system since sensors of motion and actuation implementation devices are required. This damping technique, however, does not require actuation devices which actively generate forces. Many of the disadvantages of more conventional active systems are eliminated because this variable damper generates damping forces passively, and uses active methods only to change the instantaneous value of the damping coefficient, a technique which requires less power.

The above and other features of the invention, including various novel details of construction and combination of parts, will now be described with reference to the accompanying drawings and pointed out in the claims. It will be understood that the particular vibration control system embodying the invention is shown and described by way of illustration only and not as a limitation. The principles and features of this invention may be employed in varied and numerous embodiments without departing from the scope of the invention.

Description of the drawings

Fig. 1 is a schematic representation of a conventional vibration isolation system using linear viscous damping;

Fig. 2 is a schematic representation of a conventional vibration isolation system with a viscous damper connected as a "sky hook" dampsr; and

Fig. 3 is a schematic representation of a vibration isolation system with a variable damping coefficient viscous damper, made in accordance with the present invention.

Detailed description of the preferred embodiment
A. Overview of basic system and mathematical description thereof

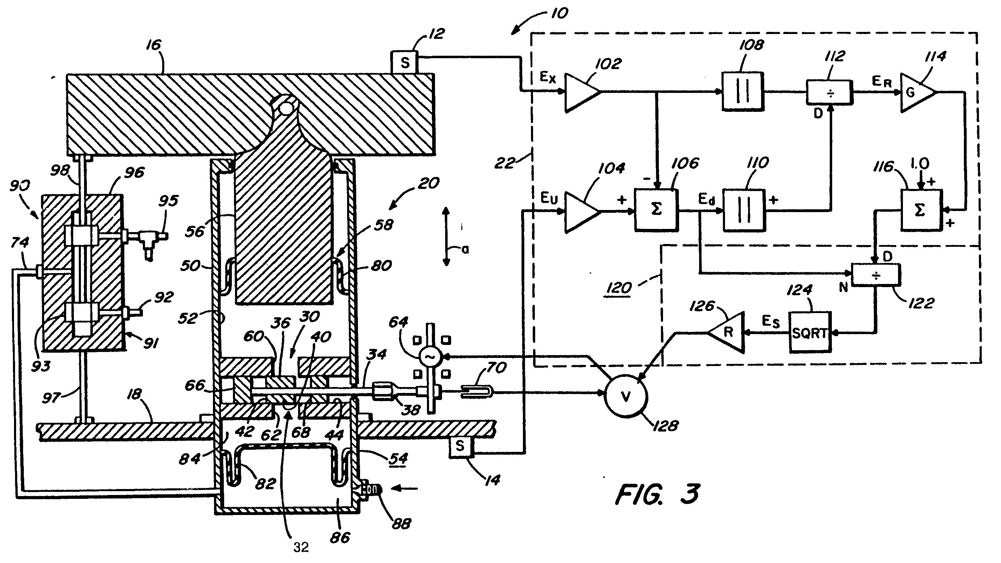

Figure 3 presents a parametrically controlled active vibration isolation system 10 made in accordance with the present invention, including two response sensors 12, 14 operatively coupled with a payload 16 and foundation or base 18 to derive a signal representative of the velocity of the payload 16 and of the base 18, dX and dU, respectively. It is recognized and discussed in the earlier application that the outputs from the two response sensors 12, 14 give only an approximation of the velocity due to the physics of the velocity sensors and so may be processed appropriately to yield a more valid velocity signal.

It should be understood that vibratory excitations of the payload 16 or of the base 18 are isolated by the system 10, i.e., their transmission is reduced or eliminated for at least a range of frequencies thereof.

The system 10 further includes a variable damping coefficient viscous damper 20 controlled by a servo-controller 22. The output signal from the servo-controller 22, called herein a "command signal", is used to modulate the damping coefficient in a manner such that the instantaneous damping coefficient is described as shown in EQ (3).

Damping coefficient=

$$C=C_1[ABS(A[dX/dV])] \tag{3}$$

where "A" is the instantaneous area of the orifice of the viscous damper, "$C_1$" is the damping coefficient when the orifice is fully open, and "dV" is the relative velocity of the payload 16 with respect to the base 18 and is equal to "dU" minus "dX".

With the damping servo terms of the system established by EQ 3, and assuming sensors 12, 14 are identical so as to have identical transfer functions, a simplified differential equation of motion may be written to describe the vibration isolation system 10. Once again using the conventional force summation procedure for the spring, damper and mass inertial forces, an engineer in the art could derive EQ (4).

$$M[d^2X]=K[U-X]-C_1(dV)(ABS[A(dX/dV)]) \tag{4}$$

Carefully note that the relative velocity, "dV", appears in both the numerator and denominator of the damping term expression, and, if it were not for the fact that the synthesized damping coefficient term has no sign, the two terms would cancel exactly and mathematically form a true "sky hook" damped system. The damping term synthesized, however, has no sign since the feedback is used only to modulate the damping coefficient, "C". Realizing this, we can rewrite the equation with the terms cancelled. The differential equation of motion of EQ (4) simplifies to the form presented in EQ (5).

$$M[(d^2X]=K[U-X]-C_1A[ABS(dX)](DELTA) \tag{5}$$

Here the term "DELTA" is equal to plus or minus one (1) and represents the sign of the relative velocity. Compare EQ (5) with the equation for motion given in EQ (1).

The above mathematical description of the system is idealized in some respects and interfacing with the real world must be considered. The actual ratio of velocities as described above would have an infinite value if the voltage signal representing the absolute payload velocity were finite and the voltage signal representing the relative velocity were zero. This is a condition occurring twice each cycle with sinusoidal vibration and, thus, is a commonly occurring event. The servo-controller 22 cannot output an infinite voltage. Thus, the command signal must be limited to have some specified maximum value which will be called $U_{MAX}$, generally, for example, approximately 10 volts. The command signal, however, may still have all values between $-U_{MAX}$ and $+U_{MAX}$, including zero. In a real system, however, when the command is zero, there must always be some residual damping remaining. Thus, in a realizable system, the damping coefficient must have a minimum value which is hereinafter referred to as "$C_0$". This leads to a formulation of the command signal for a realizable system in the form presented in the EQ (6);

Damping coefficient=

$$C=C_0 [1.0+A(ABS(dX/dV))] \tag{6}$$

In an actual system, the term $C_0$ is the damping present when the command signal is zero, while the maximum value of the damping coefficient is equal to $C_0 [1.0+A(U_{MAX})]$.

Thus, an active vibration isolation system 10 has been modelled which is characterized by a transmissibility vector equation, EQ (5), approximating that of a "sky hook" damper given in EQ (1). Details of the elements of such a system shall now be described.

B. Electromechanical viscous damper 20

As just described, the vibration isolation system 10 in accordance with the present invention operates through the dynamic modulation of the viscous damping coefficient of an otherwise linear vibration isolator. A preferred method of modulating the viscous damping coefficient is shown in Fig. 3. The damper 20 includes a servovalve 30 which acts as electro-mechanical variable orifice means for metering the flow of the fluid used to provide the damping pressure drops and resulting dissipation forces. This flow control is achieved by regulated restriction of the flow path in response to an electrical signal input to the servovalve 30, called herein the "command signal".

The electro-mechanical servovalve 30 used in accordance with the present invention establishes a predetermined flow area which in turn sets the instantaneous coefficient of damping of the vibration isolation system to a prescribed magnitude. The servovalve 30 differs somewhat from conventional servovalves. Normally servovalves are utilized for controlling of flow of fluid from a hydraulic or pneumatic pump which then generally causes the motion of the control system actuation device. The servovalve 30 does not control the flow from a pump, but rather establishes a predetermined valve opening allowing fluid flow in either direction. This takes place passively at whatever pressure conditions happen to occur at a given instant.

Vibration isolation depends on the time dependent modulation of the magnitude of the damping or dissipation force. The dissipation force is generated passively by the vibration isolation system 10 as relative velocities develop across a dissipation element. The dissipation force is equal to the instantaneous linear viscous damping coefficient, "C", multiplied by the relative velocity, and is the term to be acted upon and controlled in the present invention. Electro-mechanical control over the damping coefficient is achieved by the vibration isolation system 10 utilizing the servovalve 30 as a dissipation element within an incompressible fluid path to generate the damping or dissipation forces. The servovalve 30 includes electromechanical means for controllably varying the flow area therethrough and thereby modulating the damping coefficient of the viscous danger. The servovalve 30 includes a movable valve spool 32 including a rod or neck 34 connected to a cylindrical spool head 36 at or near one end and at the other to a drive shaft 38. The spool head 36 is of a disk-like shape, having an outer cyindrical surface or land 40, and planar end walls 42 connected to the land perpendicularly so as to form a substantially sharp edge therebetween. The spool 32 is arranged to be slidingly driven within a transverse passage 44 having an inner diameter which permits the spool head 36 to slide therein with a close fit.

The damper 20 in addition to the servovalve 30 comprises a support cylinder or receptacle 50 including two chambers 52, 54 having the servovalve 30 connecting them so as to provide regulated fluidic communication therebetween. The upper chamber 52 is a load bearing chamber, and, in combination with a payload support 56 forms a hydraulic single acting actuator 58 which is filled with an incompressible fluid of low and constant viscosity. The lower chamber 54 is a small hydraulic accumulator which acts to store incompressible hydraulic fluid at substantially a constant pressure.

As stated above, the function of the servovalve 30 is to meter the flow of hydraulic fluid according to a desired control function. Movement of valve spool 32 opens or closes orifices 60, 62 within the fluidic circuit as it is driven by the mechanical output of electro-mechanical means 64 to which it is operatively connected. Preferably the orifices 60, 62 are of identical size and configuration and direct the fluid flow perpendicularly against the cylindrical land 40 of the spool head 36.

The valve spool 32 can further include support heads 66, 68, in which case the rod 34 extends to connect all three heads 36, 66, 68. The support heads 66, 68 act to prevent cocking of the spool 32 within transverse passage 44 and are disposed in spaced arrangement on either side of the head 36. Full opening of the orifices 60, 62 by the valve spool 32 must be scaled such that the minimum fraction of critical damping of the vibration isolation system is established under all anticipated vibration isolation system excitation velocities.

The allowable direction of travel of the servovalve spool 32 determines whether the servovalve 30 is of the unidirectional or bidirectional type. A valve spool 32 which displaces only in one direction forms a dedicated unidirectional servovalve, while a valve spool which displaces in both directions forms a bidirectional servovalve. The bidirectional servovalve, however, can behave the same as the unidirectional servovalve if the controlled signal to the valve commands only one direction of spool travel; thus the bidirectional servovalve can behave as both servovalve types in so far as the resulting vibration isolation system response is concerned.

The valve spool 32 is actuated by the electro-mechanical drive means 64 which is capable of applying a driving force to displace the rod 34 within passage 44 with reference to orifices 60, 62, in response to the command signal from the servo-controller 22. Thus the drive means 64 serves to vary the opening of the variable orifice. Preferably, it comprises an electro-magnetic solenoid of a design such as is commonly used to drive a conventional loud speaker, although other forms of motors could be used. The controlling mechanical force applied to the valve spool 32 causes it to accelerate in the direction of the applied force. However, a feedback signal representative of the position of the spool head 36 relative to orifices 60, 62 is used by the servo controller 20 to control the electro-mechanical drive means 64. The feedback signal is, also representative of the damping coefficient of the viscous damper 20 since it represents the instantaneous flow area. It is preferably derived by means 70 such as a displacement transducer, for example, a linear variable differential transducer ("LVOT") sensor operatively associated with the valve spool 32.

The flow of fluid through the servovalve 30 is proportional to two parameters; namely the pressure drop across the servovalve 30, and the flow area.

Let P1 represent the pressure within the actuator 58 measured, for example in orifice 60, and let P2 represent the pressure within the hydraulic accumulator 54, measured for example in orifice 62.

Vibratory acceleration of the payload 16 causes an inertial force to be applied to the support cylinder 50. For most cases it can be safely assumed that the flow through the orifices 60, 62 is governed by EQ (7).

$$Q=C_dA[SQRT(2dP/V)]=A_c(dV) \qquad (7)$$

Where "$C_d$" is the damping coefficient of the valve opening for the fluid, "SQRT" is an abbreviation for square root of the following function, "dP" is an incremental pressure due to vibration accelerations of the payload 16, "V" is a given velocity and "$A_c$" is the load area of the supporting cylinder.

The other relating equation for this system is that of the damping force itself. The damping force is defined as:

$$\text{Damping force}=F_d=A_c(dP)=C(dV) \qquad (8)$$

The damping coefficient, "C", as controlled by the servo-controller 22 is already defined in EQ (6).

Letting "R" be the system scaling constants, defined by EQ (9),

$$R=SQRT[A_c{}^3D/(2C_dC_o)] \qquad (9)$$

where "D" is the density of the fluid.

Substituting in the above equations yields the required servovalve's orifice area for regulated flow, given by EQ (10).

$$A=R(SQRT[ABS\ dV/(1+G(ABS(dX/dV)))]) \qquad (10)$$

where "G" is gain.

Thus, to achieve the desired objectives of the invention, the flow area must be controlled in accordance with EQ (10). Generally the flow area is proportional to the valve spool's displacement. If this is the case, the valve stroke is likewise defined. Therefore, the command signal can be used to control the displacement of the valve spool 32 resulting in a corresponding change in the flow area in accordance with EQ (10), so as to exhibit a transmissability vector equation for the vibration isolation system 10 approximating that of a "sky hook" damper. The electronics of the servo-controller as shall be described hereinbelow generates the command signal to regulate the flow area in accordance with EQ (10).

A further description of the viscous damper 20 and its operation shall now be provided.

The payload support 56 is securable to the payload 16 and received in a first end of the support cylinder 50 for piston-like movement therein in response to excitations in the direction indicated by an arrow, designated by the letter "a" in Fig. 3, which is parallel to the axis of the support cylinder. In the preferred embodiment, the displacement of valve spool 32 is in a direction perpendicular to direction "a".

As previously stated, the payload support 56 cooperates with the upper chamber 52 of the support cylinder 50 so as to form actuator 58. The actuator 58 is preferably a rolling diaphragm type hydraulic actuator which is suitable in instances wherein a low resonant frequency is required. The use of a rolling diaphragm 80 to interconnect and seal the payload support 56 to the inner wall of the support cylinder 50 reduces the high coefficient of friction normally associated with other forms of hydraulic actuators consisting of a cylinder and piston without a diaphragm.

The opposite end of the upper chamber 52 is fluidically coupled directly to the servovalve 30 which regulates the flow of fluid from the actuator 58 to the accumulator 54. The accumulator 54 stores the incompressible hydraulic fluid under pressure in a manner such that pressure changes due to fluid volume changes are small. The static pressure in the vibration isolation system 10 is controlled by a pressurized compressible fluid contained within the accumugator 54. A flexible fabric-reinforced elastomeric diaphragm 82 sealed to the inner wall of the support cylinder 50 separates the accumulator 54 into subchambers 84 and 86, having therein the hydraulic fluid and the compressible fluid, respectively. Due to diaphragm 82, subchambers 84, 86 each have variable volumes and therefor are expansible in response to relative pressure changes therein. The device utilized for the accumulator 54 can indeed be a commercially available hydraulic accumulator or the lower pressure version of the hydraulic accumulator, the hydraulic snubber.

The hydraulic fluid within the upper chamber 52 and subchamber 84 can be any incompressible fluid which is compatible with the system and the environment within which the system must function. Examples of the incompressible fluid are ordinary low viscosity hydraulic oil, brake fluids normally utilized in automotive braking systems, or mixtures of water and ethylene glycol type antifreeze if extremely low operating temperatures are required.

The compressible fluid in the subchamber 86, for example, can be a gas or ordinary air. The choice of the compressible fluid in conjunction with its volume and the area of the hydraulic load supporting actuator 58 establish the resonance characteristics of the vibration isolation system.

The function of the accumulator 54 is two-fold. First, the trapped compressible fluid acts as a pneumatic spring to give the vibration isolation system a substantially linear spring stiffness, defining the isolation system undamped natural frequency. The second function is to provide a reservoir for hydraulic fluid which is maintained under a moderately high and substantially constant pressure. This provides the lift in conjunction with the load support area of the support cylinder 50 to support the static load of the payload 16.

The compressible fliud is introduced into subchamber 86 by pneumatic fitting 88.

## C. Optional height sensing and control

The electromechanical viscous damper as heretofore described is suitable for applications in which the weight of the payload does not fluctuate appreciably. For those applications in which it does, manual introduction of the compressible fluid might be undesirable. Rather, a system for automatically adjusting the lift of the damper in response to the payload weight would be advantageous.

This can be achieved by employing a height sensing control device 90 to adjust the pressure of the compressible fluid in subchamber 86 so as to maintain the quiescent relative height of the payload 16. A supply of pressurized compressible gaseous fluid from a source (not shown) is coupled to a three-way valve 91 at inlet conduit 92. Axial positioning of a double-headed valve spool 93 regulates admission of pressurized fluid to the subchamber 86 by conduit 94. Valve spool 93 similarly regulates the relief of pressure from the subchamber 86 through the exhaust conduit 95.

Valve body 96 is secured to the base 18 by, for example, linkage 97 so as to be maintained against movement in the axial direction identified by arrow "a". The valve spool 93 is affixed to rod 98 which, at the other end thereof, is secured to payload 16. Relative height fluctuations of the payload 16 with respect to the base 18 introduce fluid flow into or release fluid flow from the subchamber 86 by the opening or closing of the fluid flow path. Thus the pressure in the subchamber 86 is adjusted automatically to accommodate different payload weights.

A further understanding of the height sensing and control device 90 can be had by reference to U.S. Patent No. 2,965,372 issued December 20, 1960 to R. D. Cavanaugh and entitled "Pneumatic Isolator", the disclosure of which is incorporated herein.

## D. Response sensors 12, 14

As discussed above, the payload 16 and the base 18 are provided with response sensors 12, 14 which generate or derive after processing signals representative of the velocity of the payload 16, abbreviated "dX", and the velocity of the excitation of the base 18, abbreviated "dU", respectively.

Response sensor 12 is operatively coupled with the payload 16 either directly or via the payload support 56 which is secured to the payload 16. Response sensor 14 is operatively coupled with the base 18 either directly or via the support cylinder 50 which is secured to the base 18.

The response sensors 12, 14 can be accelerometers such as piezo-electric accelerometers, having their outputs integrated to yield a velocity signal, or electro-mechanical velocity sensors such as and preferably a geophone type mechanism. The informational content of the sensor signals is not substantially utilized for frequencies below the isolation system undamped resonant frequency; thus the motion sensor frequency response need not extend down to extremely low frequencies.

The implementation of each of the sensors 12, 14 should be such that the sensor resonant frequency should be at least one octave in frequency below the resonant frequency of the isolation system actuator. This, then, limits the application of electro-mechanical velocity sensors such as geophones to vibration isolation systems having resonant frequencies above approximately ten cycles per second. Integrated accelerometers can be utilized as velocity sensors for vibration isolation systems having resonant frequencies below about ten cycles per second.

## E. Electronic servo-controller 22

The servo-controller 22 shown in Figure 4 uses the two velocity signals and the feedback signal to generate a control function to be applied to the servovalve 30 as the command signal in the form required by EQ (10). While an all analog system is shown, it can be converted to a digital system using analog to digital and digital to analog converters for communication with the response sensors 12, 14 and the servo-controller 22. These changes are well within the skill of an engineer in the art.

The flow path of the control system signals starts with applying the output voltages $E_x$ and $E_U$ from the sensors 12, 14 to coupling means 102, 104, respectively. The function of the coupling means 102, 104 is to convert the high impedance signal from the velocity sensors 12, 14 to low impedance signals which can undergo additional manipulation without the input impedances of other circuit elements altering them, i.e., impedance matching. The coupling amplifier means 102, 104 may include, where appropriate, circuit elements (not shown) such as an amplifier to establish a desired voltage scale factor for the velocity signal; and/or frequency manipulation circuits to artificially lower the resonant frequency of the sensor, or integration circuits to integrate the acceleration signals from accelerometer sensors where used for the response sensors 12, 14 instead of velocity sensors.

The circuit used to artificially lower the resonance frequency of the sensor comprises one or two operational amplifiers (not shown) used to generate a double lag-lead transfer function. Details of the circuit and the integration circuit are well within the skill of one in this art. Details of the synthesis of linear transfer functions utilizing operational amplifiers, can be found in my prior application, of which this is a continuation-in-part.

The output signals from the coupling amplifier means 102, 104 (which signals for simplicity shall be still referred to as $E_x$ and $E_U$, respectively) are fed to a substraction circuit 106 to form a voltage signal, "$E_d$" which is the different between the signals $E_x$ and $E_U$ and represents the relative velocity.

The signals $E_x$ and $E_U$ are then inputted input into processing means 108, 110 for converting them to their absolute values.

The two absolute valued signals are then fed into an analog divider circuit 112 which also acts as an output voltage limiter; $E_X$ is fed to the numerator and $E_U$ is fed to the denominator.

The divider circuit's output is the velocity ratio $E_R$ which is limited to voltages under the maximum magnitude $E_1$.

The velocity ratio is then applied to the input of an amplifier 114 having gain G.

Next, the amplified velocity ratio signal is fed to a summer 116, where a constant voltage "$E_b$" of, for example, 1.0 volt is added to the velocity ratio as a bias. The output of the summmer 116 is a control function signal.

The remaining control electronics compensate for specific characteristics of the servovalve 30 used in the vibration isolation system 10. For example, for the electro-mechanical servovalve 30 described herein, these characteristics are the velocity squared nature of non-viscous fluid flow damping, and the nature of the displacement and positioning of the valve spool 32. The description of these compensation circuits 120 follows.

The control function signal from the summer 116 is applied as the denominator, and the relative velocity range dV from the subtracting summer 106 is applied as the numerator, of a second divider 122.

The circuitry shown in Figure 3 is for a bidirectional servo valve. For a unidirectional servo valve, the signal representing the relative velocity dV will be applied to the second divider 122 from the output of the processing means 108, 110 instead of from the subtraction circuit 106, thus insuring that the output of the second divider 122 will always be of one polarity.

The second divider's output is fed to a square root function generator 124, which for a unidirected servovalve can be single quadrant but for a bidirectional servovalve can be two quadrant to preserve the sign of the output of the second divider 122. Note that if it is desired to have a bidirectional servovalve act as an unidirectional servovalve, the only change needed is to replace the two quadrant function generator by a single quadrant function generator so as to generate only a single polarity command signal.

The output voltage, $E_s$, from the square root function generator 124 is amplified (or attenuated) by amplifier 126 which has a gain R defined in EQ (9). This sets the magnitude of the resulting damping coefficient to the proper scaling magnitude, such that the damping coefficient when $E_X$ is zero is equal, to the damping coefficient Zetazero of the vibration isolation system 10. The resulting voltage signal is fed into the valve controller to control the servovalve's openings' area as given above in EQ (10). It is this signal which is applied us the command signal to control the electro-mechanical means and thereby close the servo-control loop.

## Claims

1. A parametrically controlled active vibration isolation system (10) comprising first means (12) for deriving a first signal representative of the velocity of a payload (16) supported by the system (10); second means (14) for deriving a second signal representative of the velocity of a base (18) on which the system (10) is mounted; a viscous damper (20) operatively connected between the payload and the base; means (30) for modulating the damping coefficient (C) of the viscous damper (20) in response to a command signal; and an electronic control means (22) which receives signals from the first and second means (12, 14); characterized in that there are provided means (70) for deriving a feedback signal representative of the damping coefficient (C), that said control means continuously generates the command signal in response to said first and second velocity signals and said feedback signal and continuously applies said command signal to said modulating means (30) so as to continuously modulate the damping coefficient (C) according to the equation:

$$C = C_1 (ABS(A(dX/dV)))$$

where C is the damping coefficient of the viscous damper, $C_1$ is the damping coefficient of the same damper when a variable orifice of the viscous damper is fully opened, ABS is an abbreviation for "absolute value of", A is the instantaneous area of the variable orifice, dX is the velocity of the payload (16) and dV is the relative velocity of the pay load with respect to the base, whereby the damping coefficient (C) is controllable such that the vibration isolation system characteristics of the system (10) may be tailored to approximate a "sky hook" type damper.

2. The system of Claim 1 being further characterized by an equation of motion which is approximately:

$$M(d^2X) = K(U-X) - C_1 A(ABS(dX))DELTA,$$

where M is the payload mass, $d^2X$ is the acceleration of the payload (16), K is the spring stiffness constant, U is the displacement of the base (18), X is the displacement of the payload (16), A is the instantaneous area of the variable orifice, ABS is an abbreviation for "absolute value of", dX is the velocity of the payload (16), and DELTA is plus or minus 1.

3. The system of Claims 1 or 2 wherein said first and second deriving means are velocity sensors (12, 14).

4. The system according to any one of Claims 1 to 3 wherein each of said first (12) and second (14) sensors includes a geophone for detecting velocity of said payload (16) and base (18), respectively.

5. The system according to any one of Claims 1 to 4 wherein said modulation means (30) includes means (30, 64) for restricting fluid flow within said viscous damper (20) and said means for deriving a feedback signal (70) includes means for detecting a condition of said flow restricting means (30, 64).

6. The system of Claim 5 wherein said fluid flow restricting means (30, 64) includes an electro- mechanical means (64) for varying an opening of a variable orifice (60, 62), wherein said electro-mechanical means (64) includes a spool (32) disposed for movement relative to said opening (60, 62) and within a passage (44) so as to permit or impede fluid flow through said opening (60, 62), and means (38) for moving said spool (32) relative to said opening (60, 62) in response to the command signal.

7. The system according to any one of Claims 1 to 6 wherein said electronic control means (22) includes:

(a) coupler means (102) receiving a first velocity signal $E_X$ from said first sensor representative of the velocity of the payload (16);

(b) coupler means (104) for receiving a second velocity signal $E_U$ from said second sensor representative of the velocity of said base (18);

(c) means (112) for dividing signal $E_X$ by signal $E_U$ and deriving an output signal $E_R$; and

(d) controller means (120, 128) responsive to said signal $E_R$ and said feedback signal for deriving said command signal.

8. The system according to any one of the Claims 1 to 7, wherein said modulation means (30) is servovalve (30) restricting fluid flow between an actuator (58) and an accumulator (54) in response to said command signal.

9. The system of Claim 8 wherein said actuator (58) includes:

an actuator cylinder (50) in fluidic communication with said servovalve (30); and

a payload support partially receivable within said actuator cylinder (50).

10. The system according to Claims 8 or 9 wherein said accumulator (54) includes:

an accumulating cylinder,

a diaphragm (82) fluidly separating said accumulator cylinder into first (84) and second (86) subchambers, said first subchamber (84) being in fluidic communication with said servovalve (30) and said second subchamber (86) being gas-filled, and wherein said actuator cylinder (50) and said first subchamber (86) have hydraulic fluid therein.

11. The system according to any one of Claims 1 to 10 further including means (90) for sensing the relative height of said payload (16) with respect to said base (18) and for controlling pressure within said second subchamber (86).

12. The system of any one of Claims 1 to 11 wherein said orifice (60, 62) has an area approximated by:

$$A=R(SQRT(ABS \ dU/(1+G(ABS(dX/dV)))))),$$

where A is the orifice area, R is the system scaling constant, SQRT is an abbreviation for "square root", ABS is an abbreviation for "absolute value of", dU is the velocity of the base, G is gain, dX is the velocity of the payload, and dV is the relative velocity.

13. The system according to any one of Claims 6 to 12 wherein said electromechanical means (64) is a motor having a mechanical output responsive to said command signal, and drivingly connected to said spool (32).

14. The system according to any one of Claims 1 to 13 wherein said means (70) for deriving a feedback signal includes a displacement transducer operatively coupled to said modulating means (30).

15. The system according to any one of Claims 8 to 14 wherein the actuator (58) is a rolling-diaphragm type actuator.

16. The system according to any one of Claims 8 to 14 wherein said actuator (58) includes a support for the payload (16) and hydraulic means for supporting said payload support, said hydraulic means being in fluidic communication with said opening.

17. The system according to any one of Claim 7 to 16 wherein the circuit means (22) is not responsive to vibratory excitations at resonance in generating the command signal.

**Patentansprüche**

1. Parametrisch gesteuertes aktives Vibrationsdämpfungssystem (10) mit einer ersten Einrichtung (12) zum Ableiten eines ersten Signals, das der Geschwindigkeit einer Nutzlast (16) entspricht, die von dem System (10) getragen wird; einer zweiten Einrichtung (14) zum Ableiten eines zweiten Signals, das der Geschwindigkeit einer Basis (18) entspricht, auf der das System (10) angebracht ist; einem Proportionaldämpfer (20), der wirkungsmäßig zwischen der Nutzlast und der Basis angebracht und mit diesen verbunden ist; einer Einrichtung (30) zum Modulieren des Dämpfungskoeffizienten (C) des Proportionaldämpfers (20) in Antwort auf ein Steuerungssignal; und mit einer elektronischen Steuereinrichtung (22), die Signale von der ersten und zweiten Einrichtung (12, 14) empfängt; dadurch gekennzeichnet,

daß eine Einrichtung (70) zum Ableiten eines Rückführsignals vorgesehen ist, das dem Dämpfungskoeffizienten (C) entspricht, daß die Steuereinrichtung kontinuierlich das Steuerungssignal in Antwort auf das erste und zweite Geschwindigkeitssignal und des Rückführsignals erzeugt und kontinuierlich das Steuerungssignal der Modulationseinrichtung (30) zuführt, um kontinuierlich den Dämpfungskoeffizienten (C) gemäß der folgenden Gleichung zu modulieren:

$$C=C_1 \ (ABS(A(dX/dV)))$$

wobei C der Dämpfungskoeffizient des Proportionaldämpfers ist, $C_1$ der Dämpfungskoeffizient des selben Dämpfers ist, wenn eine variable Öffnung des Proportionaldämpfers vollständig geöffnet ist, ABS eine Abkürzung ist für "Absolutwert von", A die Augenblicksfläche der veränderlichen Öffnung ist, dX die Geschwindigkeit der Nutzlast (16) und dV die Relativgeschwindigkeit der Nutzlast bezüglich der Basis ist, wodurch der Dämpfungskoeffizient (C) derart steuerbar ist, daß die Vibrationsisolationssystemeigenschaften des Systems (10) zugeschnitten werden können, um einen Dämpfer vom "Sky hook"-Typ (in der Luft aufgehängt) anzunähern.

2. System nach Anspruch 1, das weiterhin durch eine Bewegungsgleichung gekennzeichnet ist, welche annähernd wie folgt ist:

$$M(d^2X)=K(U-X)-C_1A(ABS(dX))DELTA,$$

wo M die Nutzlastmasse ist, $d^2X$ die Beschleunigung der Nutzlast (16) ist, K die Konstante der Federsteifigkeit ist, U der Bewegungsweg der Basis (18) ist, X der Bewegungsweg der Nutzlast (16) ist, A die Augenblicksfläche der veränderlichen öffnung ist, ABS eine Abkürzung für "Absolutwert von" ist, dX die Geschwindigkeit der Nutzlast (16) ist und DELTA plus oder minus 1 ist.

3. System nach Anspruch 1 oder 2, wobei die erste und zweite Ableitungseinrichtung Geschwindigkeitssensoren (12, 14) sind.

4. System nach einem der Ansprüche 1 bis 3, wobei jeder der ersten (12) und zweiten (14) Sensoren ein Geofon aufweist zum Erfassen der Geschwindigkeit der Nutzlast (16) bzw. der Basis (18).

5. System nach einem der Ansprüche 1 bis 4, wobei die Modulationseinrichtung (30) Einrichtungen (30, 64) aufweist, zum Begrenzen des Fluidflusses in dem Proportionaldämpfer (20), und die Einrichtung zum Ableiten eines Rückführsignals (70) eine Einrichtung zum Erfassen einer Bedingung der Flußbegrenzungseinrichtung (30, 64) umfaßt.

6. System nach Anspruch 5, wobei die Fluidflußbegrenzungseinrichtung (30, 64) eine elektromagnetische Einrichtung (64) aufweist, zum Verändern einer Öffnung einer variablen öffnung (60, 62), wobei die elektromagnetische Einrichtung (64) einen Abstandsring (32) umfaßt, der für eine Relativbewegung bezüglich der öffnung (60, 62) und innerhalb eines Kanals (44) angeordnet ist, um so einen Fluidfluß durch die öffnung (60, 62) zu erlauben oder zu behindern, und eine Einrichtung (38) zum Bewegen des Abstandsrings (32) bezüglich der öffnung (60, 62) aufweist in Antwort auf das Steuersignal.

7. System nach einem der Ansprüche 1 bis 6, wobei die elektronische Steuereinrichtung (22) umfaßt:

(a) eine Kupplungseinrichtung (102), die ein erstes Geschwindigkeitssignal $E_X$ von dem ersten Sensor empfängt, das der Geschwindigkeit der Nutzlast (16) entspricht;

(b) eine Kupplungseinrichtung (104) zum Empfangen eines zweiten Geschwindigkeitssignals $E_U$ von dem zweiten Sensor, das der Geschwindigkeit der Basis (18) entspricht;

(c) eine Einrichtung (112) zum Teilen des Signals $E_X$ durch das Signal $E_U$ und zum Ableiten eines Ausgangssignals in $E_R$; und

(d) eine Steuerungseinrichtung (120, 128), die auf das Signal $E_R$ und das Rückführsignal antwortet, um das Steuerungssignal abzuleiten.

8. System nach einem der Ansprüche 1 bis 7, wobei die Modulationseinrichtung (30) ein Servoventil (30) ist, daß den Fluidfluß zwischen einem Betätiger (58) und einem Sammler (54) in Antwort auf das Steuersignal begrenzt.

9. System nach Anspruch 8, wobei der Betätiger (58) umfaßt:

einen Betätigungszylinder (50), der in Fluidverbindung mit dem Servoventil (30) steht; und

eine Nutzlaststütze, die teilweise aufnehmbar in dem Betätigungszylinder (50) ist.

10. System nach Anspruch 8 oder 9, wobei der Sammler (54) umfaßt:

einen Sammlerzylinder,

einem Membran (82), die flüssigkeitsmäßig den Sammlerzylinder in eine erste (84) und eine zweite (86) Unterkammer trennt, wobei die erste Unterkammer (84) in flüssigkeitsmäßiger Verbindung mit dem Servoventil (30) steht und die zweite Unterkammer (86) gasgefüllt ist, und wobei der Betätigungszylinder (50) und die erste Unterkammer (86) eine Hydraulikfluid darin aufweisen.

11. System nach einem der Ansprüche 1 bis 10, das weiterhin eine Einrichtung (90) zum Erfassen der relativen Höhe der Nutzlast (16) bezüglich der Basis (18) und zum Steuern des Drucks innerhalb der zweiten Unterkammer (86) aufweist.

12. System nach einem der Ansprüche 1 bis 11, wobei die öffnung (60, 62) eine Fläche aufweist, die angenähert wird durch:

$$A=R(SQRT(ABS\ dU/(1+G(ABS(dX(dV)))))),$$

wobei A die öffnungsfläche ist, R die Systemskalenkonstante ist, SQRT eine Abkürzung für "Quadratwurzel" ist, ABS eine Abkürzung für "Absolutwert von" ist, dU die Geschwindigkeit der Basis ist, G die Zunahme bzw. der Gewinn ist, dX die Geschwindigkeit der Nutzlast ist, und dV die Relativgeschwindigkeit ist.

13. System nach einem der Ansprüche 6 bis 12, wobei die elektromechanische Einrichtung (64) ein Motor ist, der eine mechanische Leistung aufweist, in Antwort auf das Steuerungssignal, und antriebsmäßig mit dem Abstandsring (32) verbunden ist.

14. System nach einem der Ansprüche 1 bis 13, wobei die Einrichtung (70) zum Ableiten eines Rückführsignals einen Bewegungswandler aufweist, der wirkungsmäßig mit der Modulationseinrichtung (30) verbunden ist.

15. System nach einem der Ansprüche 8 bis 14, wobei der Betätiger (58) ein Betätiger vom Rollmembrantyp ist.

16. System nach einem der Ansprüche 8 bis 14, wobei der Betätiger (58) einen Träger für die Nutzlast (16) und hydraulische Einrichtungen zum Stützen des Nutzlastträgers aufweist, wobei die hydraulische Einrichtung in fluidmäßigem Kontakt mit der öffnung steht.

17. System nach einem der Ansprüche 7 bis 16, wobei der Schaltkreis (22) nicht antwortet auf Vibrationsanregungen bei Resonanz bei Erzeugen des Steuersignals.

## Revendications

1. Un système actif à commande de paramètre pour l'isolation de vibrations (10) comprenant des premier moyens (12) pour déterminer un premier signal représentant la vitesse d'une charge (16) supportée par le système (10); des seconds moyens (14) pour déterminer un second signal représentant la vitesse d'une base (18) sur laquelle la système (10) est monté; un amortisseur par effet visqueux (20) connecté de façon opérative entre la charge et la base; des moyens (30) de modulation du coefficient d'amortissement (C) de l'amortisseur par effet visqueux (20) en réponse à un signal de commande; et des moyens de commande électroniques (22) qui reçoivent les signaux venant des premiers et des seconds moyens (12, 14); caractérisé en ce que sont fournis des moyens (70) pour déterminer un signal de réaction représentant le coefficient d'amortissement (C), en ce que lesdits moyens de commande génèrent continûment le signal de commande en réponse auxdits premiers et seconds signaux de vitesse et audit signal de réaction et appliquent continûment ledit signal de commande auxdits moyens de modulation (30) de façon à moduler continûment le coefficient d'amortissement (C) selon l'équation:

$$C = C_1 (ABS(A(dX/dV)))$$

où C est le coefficient d'amortissement de l'amortisseur par effet visqueux, $C_1$ est le coefficient d'amortissement du même amortisseur quand un orifice variable de l'amortisseur par effet visqueux est totalement ouvert, ABS est une abréviation de "valeur absolue de", A est la surface instantanée de l'orifice variable, dX est la vitesse de la charge (16) et dV est la vitesse relative de la charge par rapport à la base, le coefficient d'amortissement (C) étant ainsi commandable de façon à ce que les caractéristiques du système pour l'isolation de vibrations (10) puissent être adaptées pour approcher un amortisseur du type "crochet céleste".

2. Le système de la revendication 1 étant de plus caractérisé par une équation de mouvement qui est approximativement:

$$M(d^2X) = K(U-X) - C_1 A(ABS(dX))DELTA,$$

où M est la masse de la charge (16), $d^2X$ est l'accélération de la charge (16), K est la constante de rigidité de ressort, U est le déplacement de la base (18), X est le déplacement de la charge (16), A est la surface instantanée de l'orifice variable, ABS est une abréviation de "valeur absolue de", dX est la vitesse de la charge (16), et DELTA est plus ou moins 1.

3. Le système selon les revendications 1 ou 2 dans lequel les premiers et seconds moyens de détermination sont des capteurs de vitesse (12, 14).

4. Le système selon l'une quelconque des revendications 1 à 3, dans lequel chacun desdits premier (12) et second (14) capteurs inclut un géophone pour détecter respectivement la vitesse de ladite charge (16) et de ladite base (18).

5. Le système selon l'une quelconque des revendications 1 à 4 dans lequel lesdits moyens de modulation (30) incluent des moyens (30, 64) pour restreindre l'écoulement du fluide à l'intérieur dudit amortisseur par effet visqueux (20) et lesdits moyens pour déterminer un signal de réaction (70) incluent des moyens de détection d'une condition desdits moyens pour restreindre l'écoulement (30, 64).

6. Le système selon la revendication 5 dans lequel lesdits moyens pour restreindre l'écoulement du fluide (30, 64) incluent des moyens électromécaniques (64) pour modifier une ouverture d'un orifice variable (60, 62), dans lequel lesdits moyens électromécaniques (64) incluent un tambour (32) disposé pour un mouvement relatif par rapport à ladite ouverture (60, 62) et dans un passage (44) de façon à permettre ou à empêcher l'écoulement de fluide à travers ladite ouverture (60, 62) et des moyens (38) pour déplacer ledit tambour (32) relativement à ladite ouverture (60, 62) en réponse au signal de commande.

7. Le système selon l'une quelconque des revendications 1 à 6 dans lequel lesdits moyens de commande électroniques (22) incluent:

(a) des moyens de couplage (102) recevant un premier signal de vitesse $E_X$ dudit premier capteur représentant la vitesse de la charge (16);

(b) des moyens de couplage (104) pour recevoir un second signal de vitesse $E_U$ dudit second capteur représentant la vitesse de ladite base (18);

(c) des moyens (112) pour diviser le signal $E_X$ par le signal $E_U$ et déterminer un signal de sortie $E_R$; et

(d) des moyens de contrôleur (120, 128) sensibles audit signal $E_R$ et audit signal de réaction pour déterminer ledit signal de commande.

8. Le système selon l'une quelconque des revendications 1 à 7, dans lequel lesdits moyens de modulation (30) sont une servo-vanne (30) limitant l'écoulement du fluide entre un actionneur (58) et un accumulateur (54) en réponse audit signal de commande.

9. Le système selon la revendication 8 dans lequel ledit actionneur (58) inclut:

un cylinder actionneur (50) en communication fluidique avec ladite servo-vanne (30); et

un support de charge recevable partiellement dans ledit cylindre actionneur (50).

10. Le système selon les revendications 8 ou 9 dans lequel ledit accumulateur (54) inclut:

un cylindre d'accumulation,

une membrane (82) séparant de façon fluide ledit cylindre accumulateur en une première sous-chambre (84) et une second sous-chambre (86), ladite première sous-chambre (84) étant en communication fluide avec la servovanne (30) et la seconde sous-chambre (86) étant remplie de gaz, et dans lequel ledit cylindre actionneur (50) et ladite première sous-chambre (84) contiennent un fluide hydraulique.

11. Le système selon l'une quelconque des revendications 1 à 10 incluant de plus des moyens (90) pour détecter la hauteur relative de ladite charge (16) par rapport à ladite base (18) et pour commander la pression à l'intérieur de ladite seconde sous-chambre (86).

12. Le système selon l'une quelconque des revendications 1 à 11 dans lequel ledit orifice (60, 62) a une surface approchée par:

$$A=R \ (SQRT \ (ABS \ dU/(1+G(ABS(dX/dV))))),$$

où A est la surface de l'orifice, R est la constante d'échelle du système, SQRT est une abréviation de "racine carrée", ABS est un abréviation de "valeur absolue de", dU est la vitesse de la base, G est le gain, dX est la vitesse de la charge, et dV est la vitesse relative.

13. Le système selon l'une quelconque des revendications 6 à 12 dans lequel lesdits moyens électromécaniques (64) sont un moteur ayant une sortie mécanique sensible audit signal de commande et connectée en transmission audit tambour (32).

14. Le système selon l'une quelconque des revendications 1 à 13 dans lequel lesdits moyens (70) pour déterminer un signal de réaction incluent un transducteur de déplacement couplé de façon opérative auxdits moyens de modulation (30).

15. Le système selon l'une quelconque des revendications 8 à 14 dans lequel ledit actionneur (58) est un actionneur du type à membrane à roulement.

16. Le système selon l'une quelconque des revendications 8 à 14 dans lequel ledit actionneur (58) inclut un support pour la charge (16) et des moyens hydrauliques pour supporter ledit support de charge, lesdits moyens hydrauliques étant en communication fluidique avec ladite ouverture.

17. Le système selon l'une quelconque des revendications 7 à 16 dans lequel les moyens de circuit (22) ne sont pas sensibles aux excitations vibratoires à la résonance en générant le signal de commande.

FIG. 1

FIG. 2

1

FIG. 3

EP 0 215 999 B1